# EUROPÄISCHE PATENTSCHRIFT

(11) **EP 3 164 291 B1**
(45) Veröffentlichungstag und Bekanntmachung des Hinweises auf die Patenterteilung: **14.11.2018**
(21) Anmeldenummer: 15719254.3
(22) Anmeldetag: 05.05.2015
(51) Int. Cl.: B60K 35/00, B60K 37/00, B60R 11/02, B60R 13/02, B60R 11/00

(54) **ANORDNUNG ZUM FREIGEBEN UND SCHLIESSEN EINER ÖFFNUNG IN EINEM INNENAUSSTATTUNGSTEIL EINES FAHRZEUGS**
ARRANGEMENT FOR OPENING AND CLOSING AN OPENING IN AN INTERIOR TRIM PIECE OF A VEHICLE
SYSTÈME PERMETTANT DE DÉGAGER ET DE FERMER UNE OUVERTURE MÉNAGÉE DANS UN ÉLÉMENT D'ÉQUIPEMENT INTÉRIEUR D'UN VÉHICULE

(30) Priorität: 02.07.2014 DE 102014212796
(43) Veröffentlichungstag der Anmeldung: 10.05.2017
(73) Patentinhaber: Volkswagen Aktiengesellschaft, 38440 Wolfsburg (DE)
(72) Erfinder: SCHÄLLERT, Christoph, 38376 Süpplingenburg (DE); MIELKE, Robert, 49082 Osnabrück (DE)
(86) Internationale Anmeldenummer: PCT/EP2015/059871
(87) Internationale Veröffentlichungsnummer: WO 2016/000852

(56) Entgegenhaltungen:
- DE-A1-102011 109 056
- DE-U1- 20 015 730
- DE-U1-202014 100 466
- JP-A- H10 271 413
- US-A1- 2003 178 434

## Beschreibung

Die Erfindung betrifft eine Anordnung zum Freigeben und Schließen einer Öffnung in einem Innenausstattungsteil eines Fahrzeugs, insbesondere Kraftfahrzeugs, nach dem Oberbegriff des Patentanspruchs 1 der Erfindung.

Für die Zwecke der vorliegenden Beschreibung soll die übliche Fahrtrichtung eines Fahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden.

Aus der DE 198 04 743 A1 sind Aufstellmechanismen für eine in einer Instrumententafel angeordnete Fahrzeuganzeigevorrichtung, wie ein Navigationssystem, ein Fernsehgerät oder dergleichen bekannt. So ist gemäß einer ersten Ausführungsform die Anzeigevorrichtung mittels einenends angeordneter Stifte in sogenannten Nockenrillen eines die Anzeigevorrichtung aufnehmenden Gehäuses verschiebbar geführt. Wenn die Stifte längs der Nockenrillen hin und her bewegt werden, kann die Anzeigevorrichtung zwischen einem liegenden und einem stehenden bzw. aufgestellten Zustand verschoben werden, wobei im aufgestellten Zustand eine Öffnung im Gehäuse durchdrungen wird, die mittels eines schwenkbaren Deckels verschließbar ist. Der Deckel wird während des Öffnungsvorganges mittels der Anzeigevorrichtung geöffnet. Die Stifte sollen mit einem Motor über einen Zahnstangenmechanismus gekoppelt sein. Eine Drehbewegung des Motors soll durch den Zahnstangenmechanismus in eine geradlinige Hin- und Herbewegung umgesetzt werden, so dass die Stifte gleiten können. Wie der Zahnstangenmechanismus im Detail ausgebildet ist, darüber schweigt sich diese Druckschrift aus. Gemäß einer zweiten Ausführungsform der Anzeigevorrichtung ist vorgesehen, dass die Anzeigevorrichtung ebenfalls mittels einenends angeordneter Stifte in Nockenrillen verschiebbar geführt ist und so hoch- oder heruntergeklappt werden kann. Dabei sind auf der Bodenfläche eines die Anzeigevorrichtung aufnehmenden Gehäuses eine rechte und eine linke Zahnstange vorgesehen, auf denen ein Block mittels eines linken und rechten Zahnrades motorbetrieben längs der Zahnstangen bewegt werden kann. Im Block ist der besagte Motor angeordnet. Die Stifte der Anzeigevorrichtung sind sowohl in Nockenrillen des Blocks als auch in Nockenrillen des Gehäuses derart geführt, dass infolge einer Bewegung des Blocks und unter Zuhilfenahme von Verbindungsgliedern die Anzeigevorrichtung aufgestellt oder abgelegt wird.
Die DE 102 20 180 A1 beschreibt eine eine Öffnung in einem Fahrzeug freigebende und schließende Abdeckeinheit für eine in Kopfhöhe ablesbare Anzeigevorrichtung, wobei die Öffnung die Strahlen eines aus einer Anzeigevorrichtung gesandten Bildes zu einem Bildschirm, beispielsweise zur Windschutzscheibe des Fahrzeugs gelangen lässt. Die Abdeckeinheit umfasst eine Abschirmplatte, um den geometrischen Strahlengang von der Anzeigevorrichtung zum Bildschirm bzw. zur Windschutzscheibe zu unterbrechen oder freizugeben. Die Abschirmplatte lässt sich mittels eines motorbetriebenen Schwenk- und/oder Hebelmechanismus zwischen einer stehenden und einer liegenden Stellung bewegen.
Die DE 200 15 730 U1 beschreibt eine in einem Armaturenträger eines Kraftfahrzeugs vorgesehene Einbauöffnung, welche mit einem Deckel verschließbar ist, welche die Merkmale des Oberbegriffs des Anspruchs 1 zeigt. Der Deckel ist als Schiebedeckel ausgebildet und mittels eines Stellantriebs in Form eines Elektromotors aus einer Stelllage, in der die Mündung der Einbauöffnung abgedeckt ist, in eine Gebrauchslage, in der die besagte Mündung freigegeben ist, überführbar. Der Stellantrieb besteht aus einem elektrischen Antriebsmotor mit Zahnradgetriebe. Der Schiebdeckel ist mit seinen Seitenrandkanten an Führungsteilen, die seitlich der Einbauöffnung vorgesehen sind, längsverschieblich geführt. Hierzu sind an der Unterseite des Deckels hakenartige Führungen vorgesehen. Der Deckel weist unterseitig zahnstangenartige Teile an beiden Längsseitenrändern auf, die jeweils mit einem Antriebszahnrad des Zahngetriebes in Eingriff sind. Die DE 10 2011 109 056 A1 beschreibt eine Anordnung einer Halterung für ein Mobilgerät im Innenraum eines Fahrzeugs mit einer Ausfahrvorrichtung. Die Ausfahrvorrichtung ist mit der Halterung so gekoppelt, dass die Halterung von einer Ruhestellung durch eine translatorische Bewegung in eine Betriebsstellung bewegbar ist. Die Halterung ist mit einem Deckel gekoppelt, der mit der Halterung die translatorische Bewegung von der Ruhestellung in die Betriebsstellung ausführt. In der Ruhestellung der Halterung ist diese von dem Deckel verdeckt. Auf der Hinterseite einer Rückwand der Halterung ist eine geradlinig ausgebildete Zahnstange vorgesehen, die mit Zähnen eines Zahnrades einer Rotationsbremse im Eingriff ist. Die US 2003/0178434 A1 beschreibt einen Führungsmechanismus für ein Abdeckelement an einem kastenförmigen Rahmen zum Öffnen und Schließen eines Öffnungsabschnitts in beispielsweise einer Instrumententafel eines Fahrzeugs. Das Abdeckelement ist in seitlichen Führungsnuten des Rahmens verschiebbar geführt. Zum Betreiben des Abdeckelements sind am Rahmen zwei parallel nebeneinander angeordnete Zahnstangen vorgesehen, die mit je einem Zahnrad einer Antriebsquelle für das Abdeckelement im Eingriff sind. Während des Öffnens und Schließens des Abdeckelements vollführt dieses eine Schwenkbewegung. Die DE 20 2014 100 466 U1 beschreibt eine Haltevorrichtung zum Tragen und Verlagern einer Anzeigevorrichtung eines Fahrzeugs. Die Anzeigevorrichtung kann durch einen Bildschirm einer Navigationsvorrichtung des Fahrzeugs gebildet sein, welche in einer Fahrzeug-Instrumententafel angeordnet ist. Die Haltevorrichtung weist zwei Seitenwände auf, in denen jeweils erste und zweite Führungsbahnen zur Führung und zum Aufstellen der Anzeigevorrichtung vorgesehen sind. Die ersten Führungsbahnen weisen jeweils einen ersten Abschnitt mit gebogener Form und konstantem Krümmungsradius auf, an welchen sich jeweils ein geneigter, zweiter Abschnitt anschließt. Die zweiten Führungsbahnen sind jeweils durch gekrümmte Zahnstangenbahnen mit konstantem Krümmungsradius gebildet. Eine zur vorerwähnten ähnliche Lösung ist der JP H10 271413 A zu entnehmen, wobei deren Zahnstangenbahnen geradlinig ausgebildet sind.

Aufgabe der Erfindung ist es, eine im Hinblick auf den Stand der Technik alternative Anordnung zum Freigeben und Schließen einer Öffnung in einem Innenausstattungsteil eines Fahrzeugs zu schaffen, welche einfach und kostengünstig ist.

Ausgehend von einer Anordnung zum Freigeben und Schließen einer in einer Deckfläche eines Innenausstattungsteils eines Fahrzeugs, insbesondere Kraftfahrzeugs, vorgesehenen Öffnung mittels eines verstellbaren Abdeckelements, wobei das Abdeckelement durch ein Flächenelement gebildet und von einer Geschlossenstellung, in welcher das Abdeckelement die besagte Öffnung einnimmt, in eine Offenstellung, in welcher das Abdeckelement durch Verstellung desselben die Öffnung freigibt, und zurück überführbar ist, wobei das Abdeckelement zwei parallel und beabstandet zueinander angeordnete sowie in Verstellrichtung des Abdeckelements weisende Zahnstangen aufweist, die ihrerseits jeweils mit einem zugeordneten Zahnrad kämmen, wobei die Zahnräder an einem mit dem Innenausstattungsteil verbundenen Rahmenelement drehgelagert sind und mittels einer drehangetriebenen Welle untereinander verbunden sind, wobei zumindest ein Zahnrad drehfest mit der Welle verbunden ist, und wobei das Abdeckelement infolge einer Drehbewegung der mit den Zahnstangen kämmenden Zahnräder relativ zum Rahmenelement und demgemäß zur Öffnung verstellbar ist, wird die gestellte Aufgabe dadurch gelöst, dass die Zahnstangen eine kongruente, auf den Zahnrädern abwälzende Wälzkontur aufweisen, wobei die Wälzkontur entweder
a) jeweils durch einen ersten, geraden Zahnstangenabschnitt gebildet ist, der in einen zweiten, gekrümmten und durch einen Sektor eines innenverzahnten Stirnrades gebildeten Zahnstangenabschnitt übergeht, oder
b) jeweils durch einen ersten, gekrümmten und durch einen Sektor eines innenverzahnten Stirnrades gebildeten Zahnstangenabschnitt gebildet ist, der in einen zweiten, gekrümmten und durch einen Sektor eines innenverzahnten Stirnrades gebildeten Zahnstangenabschnitt übergeht, wobei der Wälzkreisdurchmesser des ersten Zahnstangenabschnitts um ein Vielfaches größer als der Wälzkreisdurchmesser des zweiten Zahnstangenabschnitts gewählt ist.

Vorteilhaft wird allein durch die Verstellbewegung der Zahnstangen mit dem daran befestigten Abdeckelement auf den Zahnrädern das Freigeben und Schließen der Öffnung bewirkt. Im Hinblick auf die erste Ausführungsvariante a) der Erfindung ist durch die gewählte Wälzkontur der Zahnstangen ein Verfahrweg des Abdeckelements bzw. eine Kurve vorgegeben, die das Abdeckelement während des Freigebens und Schließens der Öffnung beschreibt. Die zweite Ausführungsvariante b) unterscheidet sich von der ersten Ausführungsvariante im Wesentlichen dadurch, dass der erste, gerade Zahnstangenabschnitt nunmehr durch einen gekrümmten, insbesondere lediglich leicht gekrümmten ersten Zahnstangenabschnitt ersetzt ist. Durch diese Maßnahme ist vorteilhaft ein Verfahrweg bzw. eine Kurve des Abdeckelements darstellbar, der/die während des Freigebens und Schließens der Öffnung noch besser an die Kontur der die Öffnung begrenzenden Deckfläche des Innenausstattungsteils angepasst ist. Hieraus kann in vorteilhafter Weise insbesondere auch eine Minderung des erforderlichen Bauraums zum Verfahren des Abdeckelements unterhalb des Innenausstattungsteils resultieren.

Die Unteransprüche beschreiben bevorzugte Weiterbildungen oder Ausgestaltungen der Erfindung.

Bevorzugt taucht das Abdeckelement während des Freigebens der Öffnung unter die die Öffnung begrenzende Deckfläche des Innenausstattungsteils. Eine Aufstellbewegung des Abdeckelements mittels komplizierter Hebelwirkungen zum Freigeben der Öffnung, wie sie der Stand der Technik favorisiert, ist dann vorliegend entbehrlich, da das Abdeckelement während des Öffnungsvorganges unter die Deckfläche des Innenausstattungsteils taucht und zumindest abschnittsweise sozusagen parallel oder weitestgehend parallel zur besagten Deckfläche verfährt und sich demgemäß im freigegebenen Zustand der Öffnung entgegen dem Stand der Technik nicht über die Deckfläche des Innenausstattungsteils erhebt.

Bevorzugt sind die Zahnstangenabschnitte derart am Abdeckelement angeordnet, dass in Geschlossenstellung des Abdeckelements der zweite Zahnstangenabschnitt mit dem Zahnrad im Eingriff ist, wogegen in Offenstellung des Abdeckelements der erste Zahnstangenabschnitt mit dem Zahnrad im Eingriff ist. Um eine sichere Führung des Abdeckelements während des Öffnungs- und Schließvorgangs zu gewährleisten, sind in Verstellrichtung des Abdeckelements gesehen beidseitig an demselben je ein vorderer und ein hinterer Führungszapfen angeordnet, welche Führungszapfen in einer Führungsnut des Rahmenelements verschiebbar zwangsgeführt sind. Die Führungsnut ist dabei durch einen vorderen, dem vorderen Führungszapfen zugeordneten und einen hinteren, dem hinteren Führungszapfen zugeordneten Führungsnutabschnitt gebildet. Zweckmäßigerweise können dabei die Führungsnutabschnitte je Seite voneinander separiert ausgebildet sein, um in Abhängigkeit des gewählten Verfahrweges des Abdeckelements eine weitestgehend voneinander unabhängige Gestaltung der Führungsnutabschnitte zu erlauben. Vorzugsweise weisen die Führungsnutabschnitte je Seite einen derartigen Verlauf auf, dass ausgehend von der Geschlossenstellung des Abdeckelements dasselbe während des Öffnungsvorganges zunächst zahnradseitig um einen bestimmten Winkel "α" zum Zahnrad hin angekippt sowie schräg in Richtung Zahnrad geführt und schließlich entlang einer Geraden oder nahezu einer Geraden verfahren wird. Zu Beginn des Öffnungsvorganges taucht das Abdeckelement dann sozusagen unter die die Öffnung begrenzende Deckfläche des Innenausstattungsteils. Um den erforderlichen Bauraum zur Gewährleistung der Bewegung des Abdeckelements noch weiter zu minimieren, ist in Fortbildung der Erfindung vorgesehen, dass je Seite die Führungsnutabschnitte einen derartigen Verlauf aufweisen, dass das in Offenstellung des Abdeckelements nunmehr dem Zahnrad abgewandte Ende des Abdeckelements um einen bestimmten Winkel "β" zur besagten Geraden angestellt ist/wird. So kann dieses Ende in Abhängigkeit des Konturverlaufes der Deckfläche des Innenausstattungsteils beispielsweise nach oben oder nach unten um besagten Winkel "β" angestellt werden.

Besonders vorteilhaft ist die erfindungsgemäße Anordnung zum Einbau in ein Innenausstattungsteil in Form einer Instrumententafel des Fahrzeugs geeignet, um beispielsweise ein Head-Up-Display abzudecken. Unter einem Head-Up-Display wird ein Informationsanzeigesystem verstanden, bei dem die Informationen aus der Instrumententafel heraus und durch eine Öffnung in derselben hindurch in das Sichtfeld des Fahrzeugführers, beispielsweise an eine Windschutzscheibe des Fahrzeugs oder an eine separate Combiner-Scheibe des Head-Up-Displays projiziert werden. Vorliegend wird mittels des Abdeckelements die Öffnung geschlossen, wenn besagte Combiner-Scheibe eingefahren ist oder freigegeben, wenn die Combiner-Scheibe ausgefahren wird. Unter einer Combiner-Scheibe wird dabei eine teilspiegelnde, lichtdurchlässige Scheibe verstanden.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Es zeigen:
- Fig. 1: eine perspektivische Aufsicht auf ein Innenausstattungsteil eines Fahrzeugs mit der erfindungsgemäßen Anordnung zum Freigeben und Schließen einer Öffnung im Innenausstattungsteil,
- Fig. 2: die besagte Anordnung in einer Schnittansicht mit einem auf einem Rahmenelement verstellbar gelagerten Abdeckelement (Schnitt I-I nach Fig. 1),
- Fig. 3: eine schematische Darstellung einer Zahnstangen- und Führungsnutkontur des Abdeckelements,
- Fig. 4a-d: das Abdeckelement in vier verschiedenen Verstellpositionen während des Freigebens der Öffnung im Innenausstattungsteil,
- Fig. 5: eine perspektivische Darstellung des Abdeckelements korrespondierend mit der Verstellposition gemäß Fig. 4a (Geschlossenstellung),
- Fig. 6: eine perspektivische Darstellung des Abdeckelements korrespondierend mit der Verstellposition gemäß Fig. 4c (Zwischenstellung), und
- Fig. 7: eine perspektivische Darstellung des Abdeckelements korrespondierend mit der Verstellposition gemäß Fig. 4d (Offenstellung).

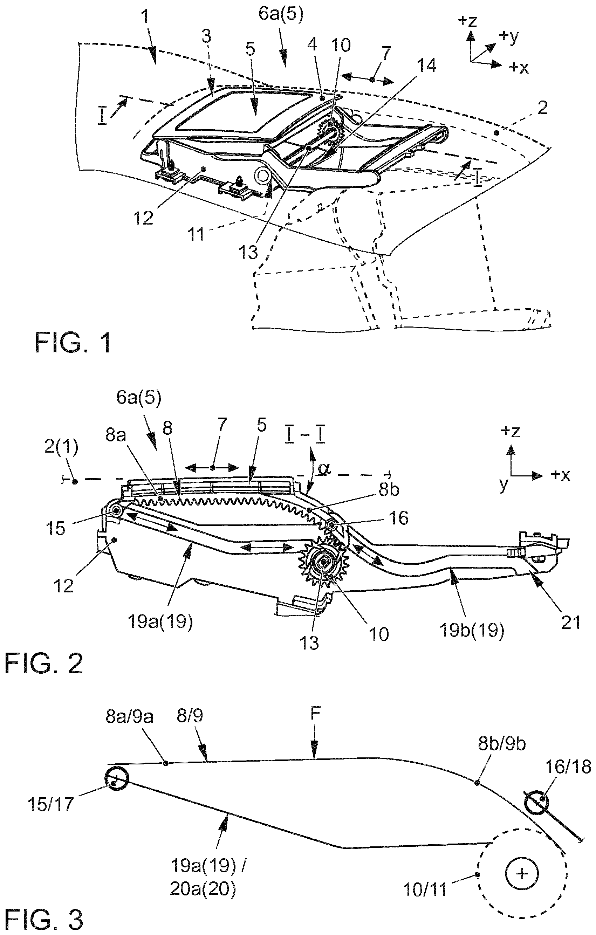

Fig. 1 zeigt zunächst einen relevanten Abschnitt eines Innenausstattungsteils 1, vorliegend beispielhaft einer Instrumententafel eines nicht zeichnerisch dargestellten Fahrzeugs, insbesondere Kraftfahrzeugs. Das Innenausstattungsteil 1 weist in einer horizontalen oder weitestgehend horizontalen oberen Deckfläche 2 eine Öffnung 3 auf, die ihrerseits von einer sich an der Deckfläche 2 abstützenden transparenten Schutzabdeckung 4 abgedeckt ist.

Gemäß diesem Ausführungsbeispiel gewährleistet besagte Öffnung 3 den geometrischen Strahlengang der mittels eines nicht zeichnerisch dargestellten Head-Up-Displays erzeugten Lichtstrahlen. Wie bereits oben ausgeführt, wird unter einem Head-Up-Display ein Informationsanzeigesystem verstanden, bei dem die Informationen aus dem Innenausstattungsteil 1 bzw. der Instrumententafel des Fahrzeugs heraus und durch die Öffnung 3 in derselben hindurch in das Sichtfeld des Fahrzeugführers, beispielsweise an eine Windschutzscheibe des Fahrzeugs oder an eine separate sogenannte Combiner-Scheibe des Head-Up-Displays projiziert werden. Mittels eines verstellbaren Abdeckelements 5 kann dabei die Öffnung 3 verschlossen oder freigegeben werden (nicht zeichnerisch dargestellt).

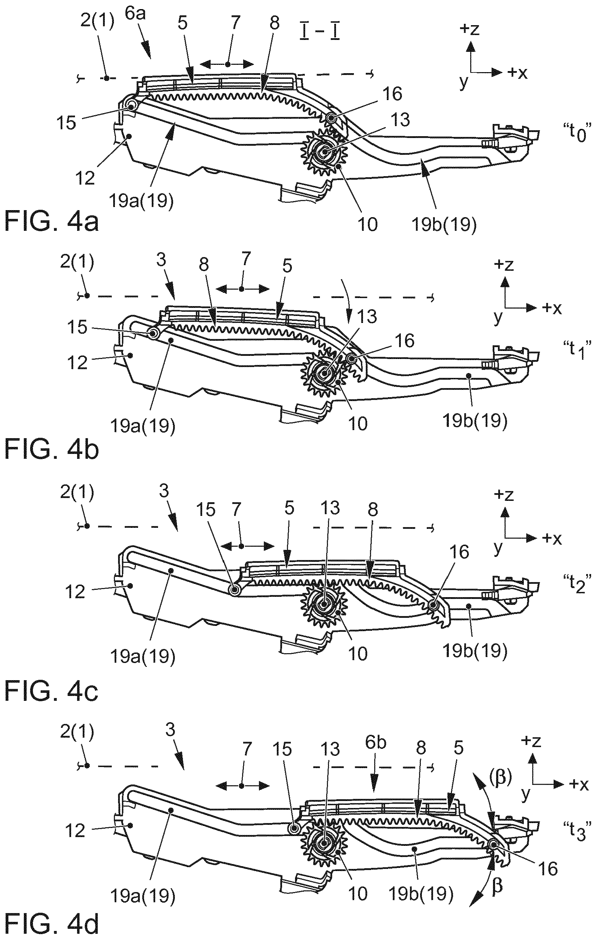

Das besagte Abdeckelement 5 ist durch ein Flächenelement gebildet und von einer Geschlossenstellung 6a, in welcher das Abdeckelement 5 die besagte Öffnung 3 einnimmt (vgl. insbes. Fig. 1, 2, 4a, 5), in eine Offenstellung 6b, in welcher das Abdeckelement 5 durch Verstellung desselben die Öffnung 3 freigibt (vgl. insbes. Fig. 4b-d, 6, 7), und zurück überführbar. Das Abdeckelement 5 ist vorliegend derart verstellbar, dass es während des Öffnungsvorganges (vgl. insbes. Fig. 4b-d, 6, 7) sozusagen längs der Öffnung 3 und unterhalb der die Öffnung 3 begrenzenden Deckfläche 2 des Innenausstattungsteils 1 verfährt und sich demgemäß im freigegebenen Zustand der Öffnung 3 nicht über die Deckfläche 2 des Innenausstattungsteils 1 erhebt. Dabei kann das Abdeckelement 5 zumindest abschnittsweise parallel oder weitestgehend parallel zur besagten Deckfläche 2 verfahren.

Das Abdeckelement 5 weist auf seiner der Deckfläche 2 des Innenausstattungsteils 1 abgewandten Seite zwei parallel und beabstandet zueinander angeordnete sowie in Verstellrichtung 7 des Abdeckelements weisende Zahnstangen 8, 9 auf. Die besagte Verstellrichtung 7 weist gemäß diesem Ausführungsbeispiel in Längsrichtung (±X-Richtung) des Fahrzeugs. Die Zahnstangen 8, 9 kämmen ihrerseits jeweils mit einem zugeordneten Zahnrad 10, 11. Die Zahnräder 10, 11 sind an einem mit dem Innenausstattungsteil 1 verbundenen und unterhalb der Deckfläche 2 desselben angeordneten Rahmenelement 12 drehgelagert (Fig. 1-7). Ferner sind die Zahnräder 10, 11 mittels einer drehangetriebenen Welle 13 untereinander verbunden, wobei zumindest eines der Zahnräder 10, 11, vorzugsweise jedoch beide Zahnräder 10, 11 drehfest mit der Welle 13 verbunden sind. Drehangetrieben werden die Welle 13 und die Zahnräder 10, 11 mittels eines Elektromotors 14, der seinerseits ortsfest am Rahmenelement 12 befestigt ist (Fig.1, 5-7). Infolge einer Drehbewegung der mit den Zahnstangen 8, 9 kämmenden Zahnräder 10, 11 ist das Abdeckelement 5 relativ zum Rahmenelement 12 und demgemäß zur Öffnung 3 in vorliegend Längsrichtung (±X-Richtung) des Fahrzeugs verstellbar.

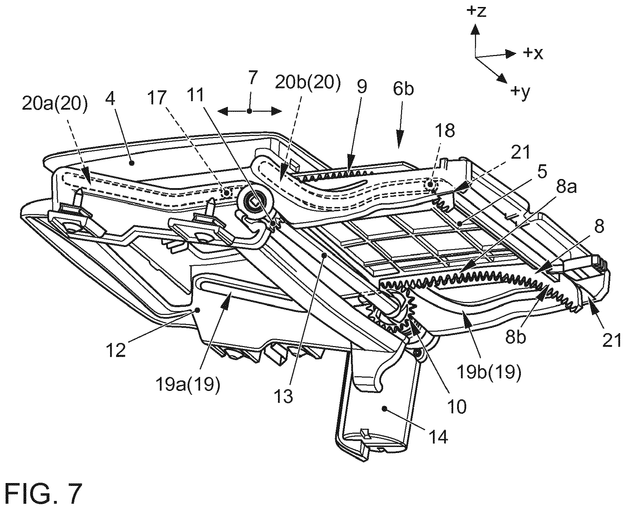

Wie insbesondere den Fig. 2-7 zu entnehmen ist, weisen die Zahnstangen 8, 9 gemäß einer ersten vorteilhaften Ausführungsvariante der Erfindung eine kongruente, auf den Zahnrädern 10, 11 abwälzende Wälzkontur auf, die jeweils durch einen ersten, geraden Zahnstangenabschnitt 8a, 9a gebildet ist, der in einen zweiten, gekrümmten und durch einen Sektor eines innenverzahnten Stirnrades gebildeten Zahnstangenabschnitt 8b, 9b übergeht (vgl. insbes. Fig. 2). Durch die gewählte Wälzkontur der Zahnstangen 8, 9 ist ein Verfahrweg des Abdeckelements 5 bzw. eine Kurve vorgegeben, die das Abdeckelement 5 während des Freigebens und Schließens der Öffnung beschreibt. Vorliegend sind die Zahnstangenabschnitte 8a, 8b; 9a, 9b derart am Abdeckelement 5 angeordnet, dass in Geschlossenstellung 6a (Fig. 1-3, 4a, 5) des Abdeckelements 5 der zweite Zahnstangenabschnitt 8b, 9b mit dem Zahnrad 10, 11 im Eingriff ist, wogegen in Offenstellung 6b (Fig. 4d, 7) des Abdeckelements 5 der erste Zahnstangenabschnitt 8a, 9a mit dem Zahnrad 10, 11 im Eingriff ist.

Um eine sichere Führung des Abdeckelements 5 während des Öffnungs- und Schließvorgangs zu gewährleisten, sind in Verstellrichtung 7 des Abdeckelements 5 gesehen beidseitig an demselben je ein vorderer und ein hinterer Führungszapfen 15, 16; 17, 18 angeordnet. Die Führungszapfen 15, 16; 17, 18 je Seite sind in einer zugeordneten Führungsnut 19, 20 des Rahmenelements 12 verschiebbar zwangsgeführt. Die Führungsnut 19, 20 kann dabei durchgängig ausgebildet sein und sowohl den vorderen als auch den hinteren Führungszapfen 15, 16; 17, 18 je Seite aufnehmen (nicht zeichnerisch dargestellt). Bevorzugt jedoch bilden die Führungsnuten 19, 20 vordere und hintere Führungsnutabschnitte 19a, 19b; 20a, 20b aus, die voneinander separiert sind (vgl. insbes. Fig. 2). Dabei sind den vorderen Führungsnutabschnitten 19a, 20a die vorderen Führungszapfen 15, 17 und den hinteren Führungsnutabschnitten 19b, 20b die hinteren Führungszapfen 16, 18 zugeordnet.

Die Führungsnutabschnitte 19a, 19b; 20a, 20b je Seite weisen einen derartigen Verlauf auf, dass ausgehend von der Geschlossenstellung 6a des Abdeckelements 5 dasselbe während des Öffnungsvorganges zunächst zahnradseitig um einen bestimmten Winkel "α" zum Zahnrad 10, 11 hin angekippt sowie schräg in Richtung Zahnrad 10, 11 geführt und schließlich entlang einer Geraden oder nahezu einer Geraden verschoben wird (Fig. 2). Unter der besagten Geraden wird vorliegend ein gerader Abschnitt des Verlaufs verstanden, der horizontal oder nahezu horizontal und/oder parallel oder nahezu parallel zur Deckfläche 2 des Innenausstattungsteils 1 verläuft.

Die vorderen Führungsnutabschnitte 19a, 20a weisen insoweit ausgehend von der besagter Öffnung 3 nach Fahrzeug-hinten hin einen schrägen Verlauf nach unten auf, der in einen geraden, insbesondere horizontalen oder nahezu horizontalen bzw. parallelen oder nahezu parallelen Verlauf zur Deckfläche 2 übergeht. Die hinteren Führungsnutabschnitte 19b, 20b weisen ebenfalls zunächst schräg nach unten, um dann in eine Gerade oder nahezu eine Gerade gemäß vorstehender Definition überzugehen. Der Winkel "α" ergibt sich im Wesentlichen aus dem schrägen Verlauf der Führungsnutabschnitte 19a, 19b; 20a, 20b sowie dem gewählten Wälzkreisdurchmesser des zweiten, gekrümmten und durch einen Sektor eines innenverzahnten Stirnrades gebildeten Zahnstangenabschnitts 8b, 9b. Infolgedessen taucht sozusagen zu Beginn des Öffnungsvorganges das Abdeckelement 5 unter die die Öffnung begrenzende Deckfläche 2 des Innenausstattungsteils 1 und wird anschließend unterhalb der besagten Deckfläche 2 weitergeführt.

Kurz gesagt sorgt der zweite, gekrümmte Zahnstangenabschnitt 8b, 9b in Kombination mit besagten Schrägen der Führungsnutabschnitte 19a, 19b; 20a, 20b für das Abtauchen des Abdeckelements 5 zu Beginn des Öffnungsvorganges. Diese Bewegung nach unten nimmt im Laufe des Verfahrwegs ab, so dass das Abdeckelement 5 nachdem es abgesenkt ist und sich der erste, gerade Zahnstangenabschnitt 8a, 9b im Eingriff mit den Zahnrädern 8, 9 befindet, ohne weiteres Absenken verfährt. Bevorzugt ist die Schräge des vorderen Führungsabschnitts 19a, 20a derart gewählt bzw. eingestellt, dass ein Nachgeben des Abdeckelements 5 bei äußerer (missbräuchlicher) Belastung "F" verhindert, zumindest jedoch wirkungsvoll behindert ist (vgl. Fig. 3). Diese Schräge soll daher nicht zu steil gestaltet werden. Überdies kann dieses Nachgeben des Abdeckelements 5 auch durch die gewählte Übersetzung des Motorgetriebes verhindert, zumindest jedoch wirkungsvoll behindert werden.

Um den erforderlichen Bauraum zur Gewährleistung der Bewegung des Abdeckelements 5 noch weiter zu minimieren, ist in Fortbildung der Erfindung vorgesehen, dass je Seite die Führungsnutabschnitte 19, 20, vorliegend die hinteren Enden 21 der hinteren Führungsnutabschnitte 19b, 20b einen derartigen Verlauf aufweisen, dass das in Offenstellung 6b des Abdeckelements 5 nunmehr dem Zahnrad 9, 10 abgewandte Ende des Abdeckelements 5 um einen bestimmten Winkel "β" zur besagten Geraden angestellt ist/wird. So kann dieses Ende des Abdeckelements 5 in Abhängigkeit des Konturverlaufes der Deckfläche 2 des Innenausstattungsteils 1 beispielsweise nach oben oder nach unten um besagten Winkel "β" angestellt werden (Fig. 4d).Gemäß diesem Ausführungsbeispiel verlaufen die besagten hinteren Enden 21 der hinteren Führungsnutabschnitte 19b, 20b nach unten, wodurch in der Ofenstellung 6b des Abdeckelements 5 das dem Zahnrad 9, 10 abgewandte Ende des Abdeckelements 5 um einen bestimmten Winkel "β" zur besagten Geraden nach unten angestellt ist (Fig. 2).

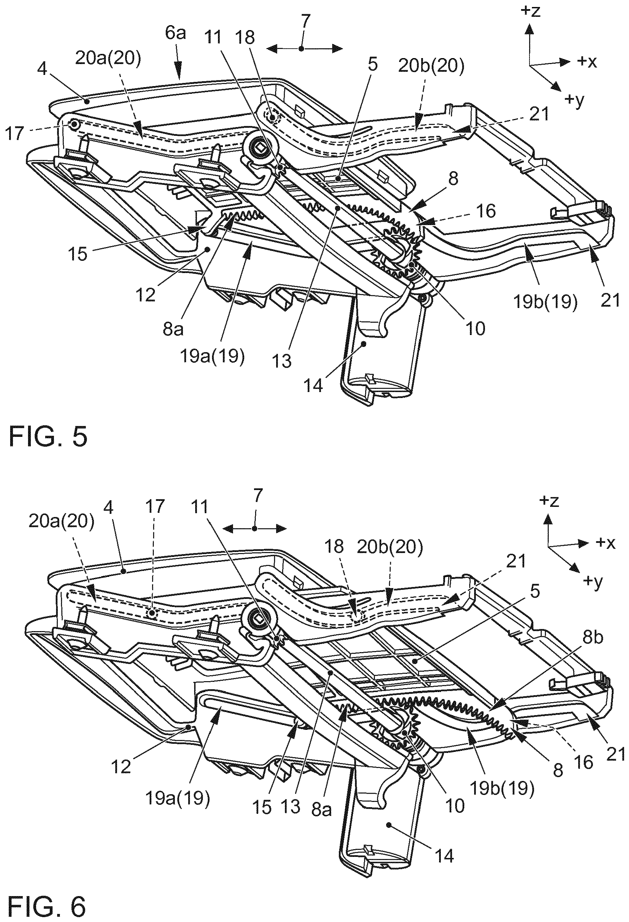

Die Fig. 4a-4d, 5-7 zeigen die erfindungsgemäße Anordnung in Funktion. Gemäß Fig. 4a und 5 befindet sich das Abdeckelement 5 zu einem Zeitpunkt "t₀" in seiner Geschlossenstellung 6a. Gesetzt den Fall, das Abdeckelement 5 soll in seine Offenstellung 6b (Fig. 4d) überführt werden, werden die Zahnräder 8, 9 mittels des hier nicht dargestellten Elektromotors 14 drehangetrieben derart, dass das Abdeckelement 5 unter Vermittlung seiner Zahnstangen 8, 9 sowie zwangsgeführt in den Führungsnuten 19, 20 in Richtung besagter Offenstellung, d. h. gemäß den Zeichnungsfiguren 4a-4d von links nach rechts verstellt bzw. verfahren wird. Der Verfahrweg des Abdeckelements 5 ist durch den Verlauf der Führungsnuten 19, 20 bzw. deren Führungsnutabschnitte 19a, 19b; 20a, 20b sowie die Wälzkontur der vorstehend beschriebenen Zahnstangen 8, 9 bzw. deren Zahnstangenabschnitte 8a, 8b; 9a, 9b vorbestimmt. Gemäß Fig. 4b taucht somit das Abdeckelement 5 zu einem Zeitpunkt "t₁" unter die hier lediglich schematisch durch eine gestrichelte Linie angedeutete Deckfläche 2 des Innenausstattungsteils 1. Gemäß Fig. 4c und 6 wird zu einem Zeitpunkt "t₂" das Abdeckelement 5 auf einer Geraden oder nahezu einer Geraden, die vorliegend parallel oder nahezu parallel zur Deckfläche 2 verläuft, geführt. Schließlich erreicht gemäß Fig. 4d und 7 zu einem Zeitpunkt "t₃" das Abdeckelement 5 seine Offenstellung 6b, wobei wahlweise dessen dem Zahnrad 9, 10 abgewandtes Ende um einen bestimmten Winkel "β" entweder zur besagten Geraden nach unten oder oben angestellt ist.

Gemäß einer zweiten, hier nicht zeichnerisch dargestellten, jedoch für einen Fachmann leicht nachvollziehbaren vorteilhaften Ausführungsvariante der Erfindung ist vorgesehen, dass die Zahnstangen 8, 9 eine kongruente, auf den Zahnrädern 10, 11 abwälzende Wälzkontur aufweisen, die jeweils durch einen ersten, gekrümmten und durch einen Sektor eines innenverzahnten Stirnrades gebildeten Zahnstangenabschnitt 8a, 9a gebildet ist, der in einen zweiten, gekrümmten und durch einen Sektor eines innenverzahnten Stirnrades gebildeten Zahnstangenabschnitt 8b, 9b übergeht. Hierbei ist der Wälzkreisdurchmesser des ersten Zahnstangenabschnitts 8a, 9a um ein Vielfaches größer gegenüber dem Wälzkreisdurchmesser des zweiten Zahnstangenabschnitts 8b, 9b gewählt. Diese zweite Ausführungsvariante unterscheidet sich von der ersten Ausführungsvariante demgemäß dadurch, dass der erste, gemäß der ersten Ausführungsvariante gerade Zahnstangenabschnitt 8a, 9a nunmehr durch einen gekrümmten, bevorzugt lediglich leicht gekrümmten ersten Zahnstangenabschnitt 8a, 9a ersetzt ist. Das heißt, der Wälzkreisdurchmesser des ersten Zahnstangenabschnitts 8a, 9a kann beispielsweise derart groß gewählt sein, dass ein nahezu gerader erster Zahnstangenabschnitt 8a, 9a gebildet ist. Durch diese Maßnahme ist vorteilhaft ein Verfahrweg bzw. eine Kurve des Abdeckelements 5 darstellbar, der/die während des Freigebens und Schließens der Öffnung 3 noch besser an die Kontur der die Öffnung 3 begrenzenden Deckfläche 2 des Innenausstattungsteils 1 angepasst ist. Hieraus resultiert in vorteilhafter Weise insbesondere auch eine Minderung des erforderlichen Bauraums zum Verfahren des Abdeckelements 5 unterhalb des Innenausstattungsteils 1.

### Bezugszeichenliste

- 1: Innenausstattungsteil
- 2: Deckfläche
- 3: Öffnung
- 4: Schutzabdeckung
- 5: Abdeckelement
- 6a: Geschlossenstellung (Abdeckelement 5)
- 6b: Offenstellung (Abdeckelement 5)
- 7: Verstellrichtung
- 8: Zahnstange
- 8a: erster Zahnstangenabschnitt
- 8b: zweiter Zahnstangenabschnitt
- 9: Zahnstange
- 9a: erster Zahnstangenabschnitt
- 9b: zweiter Zahnstangenabschnitt
- 10: Zahnrad
- 11: Zahnrad
- 12: Rahmenelement
- 13: Welle
- 14: Elektromotor
- 15: vorderer Führungszapfen
- 16: hinterer Führungszapfen
- 17: vorderer Führungszapfen
- 18: hinterer Führungszapfen
- 19: Führungsnut
- 19a: vorderer Führungsnutabschnitt
- 19b: hinterer Führungsnutabschnitt
- 20: Führungsnut
- 20a: vorderer Führungsnutabschnitt
- 20b: hinterer Führungsnutabschnitt
- 21: hintere Enden (hintere Führungsnutabschnitte 19b, 20b)

## Patentansprüche

1. Anordnung zum Freigeben und Schließen einer in einer Deckfläche (2) eines Innenausstattungsteils (1) eines Fahrzeugs, insbesondere Kraftfahrzeugs, vorgesehenen Öffnung (3) mittels eines verstellbaren Abdeckelements (5), wobei das Abdeckelement (5) durch ein Flächenelement gebildet und von einer Geschlossenstellung (6a), in welcher das Abdeckelement (5) die besagte Öffnung (3) einnimmt, in eine Offenstellung (6b), in welcher das Abdeckelement (5) durch Verstellung desselben die Öffnung (3) freigibt, und zurück überführbar ist, wobei das Abdeckelement (5) zwei parallel und beabstandet zueinander angeordnete sowie in Verstellrichtung (7) des Abdeckelements (5) weisende Zahnstangen (8, 9) aufweist, die ihrerseits jeweils mit einem zugeordneten Zahnrad (10, 11) kämmen, wobei die Zahnräder (10, 11) an einem mit dem Innenausstattungsteil (1) verbundenen Rahmenelement (12) drehgelagert sind und mittels einer drehangetriebenen Welle (13) untereinander verbunden sind, wobei zumindest ein Zahnrad (10, 11) drehfest mit der Welle (13) verbunden ist, und wobei das Abdeckelement (5) infolge einer Drehbewegung der mit den Zahnstangen (8, 9) kämmenden Zahnräder (10, 11) relativ zum Rahmenelement (12) und demgemäß zur Öffnung (3) verstellbar ist, **dadurch gekennzeichnet, dass** die Zahnstangen (8, 9) eine kongruente, auf den Zahnrädern (10, 11) abwälzende Wälzkontur aufweisen, wobei die Wälzkontur entweder
a) jeweils durch einen ersten, geraden Zahnstangenabschnitt (8a, 9a) gebildet ist, der in einen zweiten, gekrümmten und durch einen Sektor eines innenverzahnten Stirnrades gebildeten Zahnstangenabschnitt (8b, 9b) übergeht, oder
b) jeweils durch einen ersten, gekrümmten und durch einen Sektor eines innenverzahnten Stirnrades gebildeten Zahnstangenabschnitt (8a, 9a) gebildet ist, der in einen zweiten, gekrümmten und durch einen Sektor eines innenverzahnten Stirnrades gebildeten Zahnstangenabschnitt (8b, 9b) übergeht, wobei der Wälzkreisdurchmesser des ersten Zahnstangenabschnitts (8a, 9a) um ein Vielfaches größer als der Wälzkreisdurchmesser des zweiten Zahnstangenabschnitts (8b, 9b) gewählt ist.

2. Anordnung nach dem vorhergehenden Anspruch, **dadurch gekennzeichnet, dass** das Abdeckelement (5) während des Freigebens der Öffnung (3) unter die die Öffnung (3) begrenzende Deckfläche (2) des Innenausstattungsteils (1) taucht.

3. Anordnung nach einem der vorhergehenden Ansprüche, **dadurch gekennzeichnet, dass** die Zahnstangenabschnitte (8a, 8b; 9a, 9b) derart am Abdeckelement (5) angeordnet sind, dass in Geschlossenstellung (6a) des Abdeckelements (5) der zweite Zahnstangenabschnitt (8b, 9b) mit dem Zahnrad (11, 12) im Eingriff ist, wogegen in Offenstellung (6b) des Abdeckelements (5) der erste Zahnstangenabschnitt (8a, 9a) mit dem Zahnrad (11, 12) im Eingriff ist.

4. Anordnung nach einem der vorhergehenden Ansprüche, **dadurch gekennzeichnet, dass** in Verstellrichtung (7) des Abdeckelements (5) gesehen beidseitig an demselben je ein vorderer und ein hinterer Führungszapfen (15, 16; 17, 18) angeordnet sind, welche Führungszapfen (15, 16; 17, 18) in einer Führungsnut (19, 20) des Rahmenelements (12) verschiebbar zwangsgeführt sind.

5. Anordnung nach Anspruch 4, **dadurch gekennzeichnet, dass** die Führungsnut (19, 20) durch einen vorderen und einen hinteren Führungsnutabschnitt (19a, 19b; 20a, 20b) gebildet ist.

6. Anordnung nach Anspruch 5, **dadurch gekennzeichnet, dass** die Führungsnutabschnitte (19a, 19b; 20a, 20b) je Seite voneinander separiert ausgebildet sind.

7. Anordnung nach Anspruch 6, **dadurch gekennzeichnet, dass** je Seite die Führungsnutabschnitte (19a, 19b; 20a, 20b) einen derartigen Verlauf aufweisen, dass ausgehend von der Geschlossenstellung (6a) des Abdeckelements (5) dasselbe während des Öffnungsvorganges zunächst zahnradseitig um einen bestimmten Winkel "α" zum Zahnrad (10, 11) hin angekippt sowie schräg in Richtung Zahnrad (10, 11) geführt und schließlich entlang einer Geraden oder nahezu einer Geraden verfahren wird.

8. Anordnung nach Anspruch 7, **dadurch gekennzeichnet, dass** je Seite die Führungsnutabschnitte (19a, 19b; 20a, 20b) einen derartigen Verlauf aufweisen, dass das in Offenstellung (6b) des Abdeckelements (5) nunmehr dem Zahnrad (10, 11) abgewandte Ende des Abdeckelements (5) um einen bestimmten Winkel "β" zur besagten Geraden angestellt ist.

9. Anordnung nach einem der vorhergehenden Ansprüche, **dadurch gekennzeichnet, dass** das Innenausstattungsteil (1) eine Instrumententafel des Fahrzeugs ist.

10. Anordnung nach einem der vorhergehenden Ansprüche zum Abdecken eines Head-Up-Displays.

## Claims

1. Arrangement by way of which an opening (3) provided in a top surface (2) of an interior-equipment part (1) of a vehicle, in particular motor vehicle, is released and closed by means of an adjustable covering element (5), wherein the covering element (5) is formed by a surface-area element and can be transferred from a closed position (6a), in which the covering element (5) occupies said opening (3), into an open position (6b), in which the covering element (5) releases the opening (3) by being adjusted, and back again, wherein the covering element (5) has two racks (8, 9) which are arranged parallel to one another, at a distance apart, are oriented in the adjustment direction (7) of the covering element (5) and, for their part, each mesh with an associated gearwheel (10, 11), wherein the gearwheels (10, 11) are mounted in a rotatable manner on a frame element (12), which is connected to the interior-equipment part (1), and are connected to one another by means of a rotationally driven shaft (13), wherein at least one gearwheel (10, 11) is connected in a rotationally fixed manner to the shaft (13), and wherein, as a result of a rotational movement of the gearwheels (10, 11), which mesh with the racks (8, 9), the covering element (5) can be adjusted relative to the frame element (12) and, accordingly, to the opening (3), **characterized in that** the racks (8, 9) have a congruent rolling contour, which rolls on the gearwheels (10, 11), wherein the rolling contour either
a) is formed in each case by a first, rectilinear rack portion (8a, 9a), which merges into a second, curved rack portion (8b, 9b), which is formed by a sector of an internally toothed spur wheel, or
b) is formed in each case by a first, curved rack portion (8a, 9a), which is formed by a sector of an internally toothed spur wheel and merges into a second, curved rack portion (8b, 9b), which is formed by a sector of an internally toothed spur wheel, wherein the rolling circle diameter of the first rack portion (8a, 9a) is selected to be a number of times greater than the rolling circle diameter of the second rack portion (8b, 9b).

2. Arrangement according to the preceding claim, **characterized in that**, as the opening (3) is being released, the covering element (5) descends beneath the top surface (2) of the interior-equipment part (1), said top surface delimiting the opening (3).

3. Arrangement according to one of the preceding claims, **characterized in that** the rack portions (8a, 8b; 9a, 9b) are arranged on the covering element (5) such that, in the closed position (6a) of the covering element (5), the second rack portion (8b, 9b) is in engagement with the gearwheel (11, 12), whereas, in the open position (6b) of the covering element (5), the first rack portion (8a, 9a) is in engagement with the gearwheel (11, 12).

4. Arrangement according to one of the preceding claims, **characterized by** the arrangement, on either side of the covering element (5), of a respective front and rear guide stub (15, 16; 17, 18), as seen in the adjustment direction (7) of said covering element, which guide stubs (15, 16; 17, 18) are positively guided in a displaceable manner in a guide groove (19, 20) of the frame element (12).

5. Arrangement according to Claim 4, **characterized in that** the guide groove (19, 20) is formed by a front and a rear guide-groove portion (19a, 19b; 20a, 20b).

6. Arrangement according to Claim 5, **characterized in that** the guide-groove portions (19a, 19b; 20a, 20b) are separated from one another on each side.

7. Arrangement according to Claim 6, **characterized in that**, on each side, the guide-groove portions (19a, 19b; 20a, 20b) follow such a course that, starting from the closed position (6a) of the covering element (5), the latter, during the opening operation, first of all is tilted on the gearwheel side by a certain angle "α" in the direction of the gearwheel (10, 11), and guided obliquely in the direction of the gearwheel (10, 11), and finally is displaced along a straight line, or more or less a straight line.

8. Arrangement according to Claim 7, **characterized in that**, on each side, the guide-groove portions (19a, 19b; 20a, 20b) follow such a course that that end of the covering element (5) which is then directed away from the gearwheel (10, 11) in the open position (6b) of the covering element (5) is positioned at a certain angle "β" to said straight line.

9. Arrangement according to one of the preceding claims, **characterized in that** the interior-equipment part (1) is an instrument panel of the vehicle.

10. Arrangement according to one of the preceding claims for covering a head-up display.

## Revendications

1. Dispositif de libération et de fermeture d'une ouverture (3) prévue dans une surface supérieure (2) d'un élément d'aménagement intérieur (1) d'un véhicule, notamment d'un véhicule automobile, au moyen d'un élément de recouvrement déplaçable (5), l'élément de recouvrement (5) étant formé par un élément de surface et pouvant être transféré d'une position fermée (6a), dans laquelle l'élément de recouvrement (5) occupe ladite ouverture (3), dans une position ouverte (6b) dans laquelle l'élément de recouvrement (5) libère par son déplacement l'ouverture (3), et inversement, l'élément de recouvrement (5) comportant deux crémaillères (8, 9) qui sont disposées parallèlement à distance l'une de l'autre, qui sont dirigées dans la direction de déplacement (7) de l'élément de recouvrement (5) et qui s'engrènent de leur côté avec une roue dentée associée (10, 11), les roues dentées (10, 11) étant montées à rotation sur un élément de cadre (12), relié à l'élément d'aménagement intérieur (1), et étant reliées entre elles au moyen d'un arbre (13) entraîné en rotation, au moins une roue dentée (10, 11) étant reliée solidairement à l'arbre (13) et l'élément de recouvrement (5) étant déplaçable par rapport à l'élément de cadre (12) et par conséquent par rapport à l'ouverture (3) à la suite d'un mouvement de rotation des roues dentées (10, 11) engrenées avec les crémaillères (8, 9), **caractérisé en ce que** les crémaillères (8, 9) présentent un contour de roulement congruent roulant sur les roues dentées (10, 11), le contour de roulement étant formé soit
a) par une première partie de crémaillère droite (8a, 9a) qui se transforme en une deuxième partie de crémaillère (8b, 9b) incurvée et formée par un secteur d'une roue droite à denture intérieure, ou
b) par une première partie de crémaillère (8a, 9a) qui est incurvée et formée par un secteur d'une roue droite à denture intérieure et qui se transforme en une deuxième partie de crémaillère (8b, 9b) incurvée et formée par un secteur d'une roue droite à denture intérieure, le diamètre de cercle primitif de la première partie de crémaillère (8a, 9a) étant choisi pour être un multiple du diamètre de cercle primitif de la deuxième partie de crémaillère (8b, 9b).

2. Dispositif selon la revendication précédente, **caractérisé en ce que**, lors de la libération de l'ouverture (3), l'élément de recouvrement (5) plonge au-dessous de la surface supérieure (2) de l'élément d'aménagement intérieur (1) qui délimite l'ouverture (3) .

3. Dispositif selon l'une des revendications précédentes, **caractérisé en ce que** les parties de crémaillère (8a, 8b ; 9a, 9b) sont disposées au niveau de l'élément de recouvrement (5) de telle sorte que, dans la position fermée (6a) de l'élément de recouvrement (5), la deuxième partie de crémaillère (8b, 9b) s'engrène avec la roue dentée (11, 12) tandis que, dans la position ouverte (6b) de l'élément de recouvrement (5), la première partie de crémaillère (8a, 9a) s'engrène avec la roue dentée (11, 12).

4. Dispositif selon l'une des revendications précédentes, **caractérisé en ce que**, lorsque l'on regarde dans la direction de déplacement (7) de l'élément de recouvrement (5), des broches de guidage avant et arrière (15, 16 ; 17, 18) sont disposées des deux côtés sur l'élément de recouvrement, lesquelles broches de guidage (15, 16 ; 17, 18) sont chacune guidées en force de manière coulissante dans une rainure de guidage associée (19, 20) de l'élément de cadre (12).

5. Dispositif selon la revendication 4, **caractérisé en ce que** les rainures de guidage (19, 20) sont chacune formées par des parties de rainure de guidage avant et arrière (19a, 19b ; 20a, 20b).

6. Dispositif selon la revendication 5, **caractérisé en ce que** les parties de rainure de guidage (19a, 19b ; 20a, 20b) sont formées de chaque côté en étant séparées les unes des autres.

7. Dispositif selon la revendication 6, **caractérisé en ce que**, de chaque côté, les parties de rainure de guidage (19a, 19b ; 20a, 20b) ont une allure telle que, à partir de la position fermée (6a) de l'élément de recouvrement (5), ce dernier est incliné au cours du processus d'ouverture tout d'abord, du côté de la roue dentée, d'un certain angle « α » en direction de la roue dentée (10, 11) et est guidé obliquement en direction de la roue dentée (10, 11) et finalement est déplacé le long d'une ligne droite ou d'une ligne à peu près droite.

8. Dispositif selon la revendication 7, **caractérisé en ce que**, de chaque côté, les parties de rainure de guidage (19a, 19b ; 20a, 20b) ont une allure telle que l'extrémité de l'élément de recouvrement (5), qui est désormais opposée à la roue dentée (10, 11) dans la position ouverte (6b) de l'élément de recouvrement (5), forme un certain angle « β » par rapport à ladite ligne droite.

9. Dispositif selon l'une des revendications précédentes, **caractérisé en ce que** l'élément d'aménagement intérieur (1) est un tableau de bord du véhicule.

10. Dispositif selon l'une des revendications précédentes destiné à recouvrir un affichage tête haute.
